# EUROPÄISCHE PATENTSCHRIFT

(11) **EP 2 209 993 B1**
(45) Veröffentlichungstag und Bekanntmachung des Hinweises auf die Patenterteilung: **24.07.2013**
(21) Anmeldenummer: 08840614.5
(22) Anmeldetag: 15.10.2008
(51) Int. Cl.: F04B 39/08, F16K 3/08, F16K 31/00, F16K 31/04, F16K 31/06

(54) **AKTIV GESTEUERTES VENTIL UND VERFAHREN ZUM BETRIEB DES VENTILS**
ACTIVELY CONTROLLED VALVE AND METHOD OF OPERATING SAID VALVE
SOUPAPE ACTIVEMENT CONTROLEE ET PROCEDE D'OPERATION DE CETTE SOUPAPE

(30) Priorität: 18.10.2007 WO PCT/EP2007/061143
(43) Veröffentlichungstag der Anmeldung: 28.07.2010
(73) Patentinhaber: Burckhardt Compression AG, 8404 Winterthur (CH)
(72) Erfinder: HAURI, Philipp, CH-8006 Zürich (CH); FRIEDL, Markus, CH-8001 Zürich (CH); SCHLEGEL, Andreas, CH-8135 Langnau Am Albis (CH); VOSER, Alexandre, CH-8352 Elsau (CH); LEHMANN, Markus, CH-8477 Oberstammheim (CH)
(74) Vertreter: Dr. Graf & Partner AG
(86) Internationale Anmeldenummer: PCT/EP2008/063914
(87) Internationale Veröffentlichungsnummer: WO 2009/050215

(56) Entgegenhaltungen:
- EP-B1- 0 971 160
- WO-A-01/59266
- WO-A-01/65157
- DE-A1- 3 223 557
- FR-A- 2 834 119
- US-A- 2 718 614
- US-A- 4 496 134
- US-A- 4 577 832
- US-A- 5 531 205
- US-B1- 6 808 370

## Beschreibung

Die Erfindung betrifft ein aktiv gesteuertes Ventil gemäss dem Oberbegriff von Anspruch 1 sowie ein Verfahren zum Betrieb eines aktiv gesteuerten Ventils gemäss dem Oberbegriff von Anspruch 14.

In konventionellen Kompressorventilen, wie sie seit über 100 Jahren verwendet werden, führt ein Kräftegleichgewicht von Federkräften und Druckkräften an einem Schliesskörper dazu, dass dieser Schliesskörper in Strömungsrichtung vom Ventilsitz wegbewegt wird. Schliesskörper sind meistens Platten, können aber auch Noppen sein. Nachteilig an dieser Bauart ist die Tatsache, dass das Fluid den Schliesskörper zu umströmen hat, und dabei zweimal eine Richtungsänderung erfährt. Dies hat zur Folgen, dass am Ventil ein grösserer Druckabfall auftritt, und bewirkt zudem, dass sich ein enger Strömungsquerschnitt ausbildet, entlang welchem das Fluid eine hohe Strömungsgeschwindigkeit aufweist.

Die Druckschrift US 6149400 offenbart ein konventionelles Ventil der Plattenbauart. Die Bewegung der Platte kann mit einer zusätzlichen Kraft aus einer Magnetspule so beeinflusst werden, dass die Platte verzögert von der offenen in die geschlossene Position bewegt wird. Die oben beschriebenen Nachteile bleiben aber bestehen.

Die Druckschriften EP 0 971 160 B 1 offenbart ein aktiv gesteuertes Ventil für einen Kolbenkompressor. Das Ventil umfasst eine Ventilplatte, welche bezüglich einer Gegenplatte drehbar gelagert ist, um durch Drehen eine Durchlassöffnung entweder zu öffnen oder zu schliessen. Die Ventilplatte wird dabei direkt von einem externen Antrieb bewegt. Nachteilig an diesen bekannten Konzepten ist die Tatsache, dass diese nur langsam und ungenau betätigbar sind. Den gleichen Nachteil weisen Ventile gemäss den Druckschriften WO01/65157 und WO01/59266A1 auf, die eine leicht abgewandelte Form des bereits beschriebenen Patents beschreiben.

Es ist Aufgabe der vorliegenden Erfindung ein aktiv gesteuertes Ventil zu bilden, welches vorteilhaftere Betriebseigenschaften aufweist.

Diese Aufgabe wird gelöst mit einem aktiv gesteuerten Ventil aufweisend die Merkmale von Anspruch 1. Die Unteransprüche 2 bis 13 betreffen weitere, vorteilhafte Ausgestaltungen von aktiv gesteuerten Ventilen. Die Aufgabe wird weiter gelöst mit einem Verfahren zum Betrieb eines aktiv gesteuerten Ventils aufweisend die Merkmale von Anspruch 14.

Die Aufgabe wird insbesondere gelöst mit einem aktiv gesteuerten Ventil mit einem Gehäuse, umfassend eine beweglich gelagerte Ventilplatte mit Durchlassöffnungen sowie eine fest bezüglich dem Gehäuse angeordnete Gegenplatte mit Durchlassöffnungen, wobei die Ventilplatte derart bezüglich der Gegenplatte beweglich gelagert ist, dass die Durchlassöffnungen einen geöffneten oder verschlossenen Durchlass ausbilden, sowie umfassend eine Antriebsvorrichtung, welche die Ventilplatte antreibt, wobei die Ventilplatte über eine Antriebsfeder mit der Antriebsvorrichtung verbunden ist, und wobei eine ansteuerbare Haltevorrichtung derart wirkend angeordnet ist, dass die Lage der Ventilplatte fixierbar ist.

Die Ventilplatte ist um eine Längsachse drehbar beziehungsweise rotierbar gelagert. Ein derartiges Ventil wird auch als ein Drehschieberventil bezeichnet. Die Antriebsfeder ist als eine konzentrisch zur Längsachse verlaufende Torsionsfeder ausgestaltet, welche die Antriebsvorrichtung mit der Ventilplatte verbindet.

Die Ventilplatte ist über eine zusätzliche Halte feder mit dem Gehaüse verbunden.

Die Aufgabe wird weiter insbesondere gelöst mit einem Verfahren zum Betrieb eines aktiv gesteuerten Ventils, umfassend eine beweglich gelagerte Ventilpatte, eine fest angeordnete Gegenplatte, eine über eine Antriebsfeder mit der Ventilplatte verbundene Antriebsvorrichtung, sowie eine ansteuerbare Haltevorrichtung, wobei die Ventilplatte durch die Haltevorrichtung in ihrer Position festgehalten wird, danach die Antriebsfeder durch die Antriebsvorrichtung gespannt wird, danach die Ventilplatte durch die Haltevorrichtung losgelassen wird, sodass die Ventilplatte durch die in der Antriebsfeder gespeicherten Energie bewegt wird, und danach die Ventilplatte bei deren Stillstand oder annäherndem Stillstand wieder durch die Haltevorrichtung gehalten wird. Die Haltevorrichtung ist vorteilhafterweise sehr schnell aktivierbar, beispielsweise indem die Haltevorrichtung einen piezoelektrischen Antrieb umfasst, welcher zum Antrieb der Haltevorrichtung dient. Ein derartiges Ventil kann innerhalb einer kurzen Zeit von bis zu weniger als 1 ms geöffnet beziehungsweise geschlossen werden.

Das erfindungsgemässe Ventil beziehungsweise das erfindungsgemässe Verfahren weist in einer vorteilhaften Ausgestaltung den Vorteil auf, dass die Antriebsenergie, welche zum Bewegen der Ventilplatte erforderlich ist, zumindest zu wesentlichen Teilen oder sogar vollständig in der Antriebsfeder gespeichert wird, und dass eine ansteuerbare und vorzugsweise sehr schnell betätigbare Haltevorrichtung vorgesehen ist, welche die Lage der Ventilplatte fixiert beziehungsweise loslässt. Ist die Antriebsfeder einmal gespannt, so wirkt sich die mechanische Trägheit der Antriebsvorrichtung nicht mehr auf die Schaltzeit des Ventils aus. Die Schaltzeit wird im Wesentlichen durch die in der Antriebsfeder gespeicherte Energie, die Massenträgheit der bewegten Komponenten, insbesondere der Ventilplatte, sowie die Schnelligkeit der Haltevorrichtung bestimmt. Das derart ausgestaltete, erfindungsgemäss Ventil weist daher äusserst kurze Schaltzeiten zwischen Offenstellung und Geschlossenstellung auf.

Während dem Betrieb des Ventils ist es die Aufgabe der Antriebsvorrichtung zu gewährleisten, dass in der Antriebsfeder jeweils genügend Energie gespeichert ist um die Ventilplatte zu bewegen. Dazu wird das Ventil in einer vorteilhaften Ausgestaltung während dem Stillstand von der Haltevorrichtung gehalten, und die Antriebsvorrichtung während diesem Zustand betätigt, um die Antriebsfeder zusätzlich zu spannen, sodass in der Antriebsfeder wiederum genügend Energie gespeichert ist, um beim nächstfolgenden Loslassen der Haltevorrichtung die Ventilplatte zu bewegen.

Das erfindungsgemässe Ventil wird vorzugsweise derart betrieben, dass sich die Ventilplatte beim Betätigen der Haltevorrichtung, das heisst beim Loslassen oder Festhalten der Haltevorrichtung, im Stillstand oder im annährenden Stillstand befindet. Die Haltevorrichtung greift somit bei Stillstand oder annäherndem Stillstand am beweglichen Teil an, was den Vorteil aufweist, dass die Haltevorrichtung einem äusserst geringen Verschleiss unterliegt. Das erfindungsgemässe Ventil ist daher während langer Zeit wartungsfrei betreibbar und weist daher eine äusserst lange Standzeit auf.

In einer besonders vorteilhaften Ausgestaltung ist die Ventilplatte über eine konzentrisch zur Antriebsfeder verlaufende Haltefeder mit dem Gehäuse verbunden. In einer besonders vorteilhaften Ausgestaltung wird die Federenergie im Wesentlichen in der Haltefeder gespeichert beziehungsweise akkumuliert. Das Akkumulieren von Federenergie in der Haltefeder erfolgt vorzugsweise dadurch, dass die Ventilplatte von der Haltevorrichtung festgehalten wird, dass danach die Antriebsfeder von der Antriebsvorrichtung in eine Richtung spannt wird, und dass danach die Haltevorrichtung die Ventilplatte loslässt, worauf die Ventilplatte sich bewegt und von der Haltevorrichtung beim Erreichen der Ruheposition wieder festgehalten wird. Darauf wird der Vorgang in die andere Richtung wiederholt, wobei sich die Ventilplatte jedes Mal ein bisschen weiter bewegt. Sobald die Auslenkung einen vorbestimmten Wert überschreitet, fixiert die Haltevorrichtung die Stellung der Ventilplatte, sodass die Ventilplatte in ihrer Lage und mit vorgespannter Haltefeder gehalten ist. Dieser Aufschaukelungsvorgang beziehungsweise das Spannen der Haltefeder erfolgt vorzugsweise innerhalb einer Zeitspanne von weniger als einer Sekunde. Ein Vorteil dieses Aufschaukelungsvorganges ist darin zu sehen, dass die von der Antriebsvorrichtung zugeführte Energie in der Haltefeder akkumuliert wird, sodass in der Haltefeder eine relativ grosse Federenergie gespeichert werden kann. Zusätzlich muss der Antrieb nicht das ganze zum Bewegen der Ventilplatte notwendige Moment aufwenden können und kann daher kleiner, leichter und kostengünstiger ausgelegt werden.

Das erfindungsgemässe, aktiv gesteuerte Ventil kann sowohl als Druck - oder als Saugventil ausgestaltet sein, und ist insbesondere für Kolbenkompressoren geeignet. Das erfindungsgemässe Ventil weist die Vorteile auf, dass die Durchlassöffnungen eine relativ grosse Querschnittfläche von bis zu 30% der Fläche der Ventilplatte freigeben kann, dass diese Querschnittfläche in sehr kurzer Zeit von bis zu weniger als 2 ms freigegeben werden kann, und dass das Ventil keine Umlenkung der Strömung erfordert.

In einer weiteren vorteilhaften Ausgestaltung umfasst die Antriebsvorrichtung einen beweglichen Anker, welcher von einer Mehrzahl von Elektromagneten ansteuerbar angezogen werden kann, sodass der Anker durch ein Betätigen der Magnete bewegt werden kann. In einer vorteilhaften Ausgestaltung ist diese Antriebsvorrichtung zudem auch als Haltevorrichtung ausgestaltet, indem das Elektromagnet während einer gewissen Zeit aktiviert bleibt, und dadurch der Anker in einer definierten Position gehalten werden kann. Nach dem Deaktivieren des Elektromagneten ist der Anker wieder beweglich und die Haltefunktion der Antriebs- und Haltevorrichtung somit aufgehoben.

Das erfindungsgemässe Ventil weist die folgenden Vorteile auf:
- weniger Strömungsverluste, da die Durchlassöffnung des Ventil einen grossen Strömungsquerschnitt aufweisen kann, der etwa doppelt so gross ist, wie bei konventionellen Ventilen.
- Effizienzsteigerung durch zeitlich sehr präzises Öffnen und Schliessen des Ventils, da der Zeitpunkt auf bis zu 1 bis 2 ms genau bestimmt werden kann.
- Da das Ventil kaum Verschleissteile aufweist beziehungsweise einem sehr geringen Verschleiss unterliegt weist das Ventil eine längere Lebensdauer auf, was einen geringeren Wartungsaufwand und somit höhere Standzeiten zur Folge hat.
- Das erfindungsgemässe Ventil kann als Ersatz bestehender Ventile verwendet werden, wobei das Ventil derart ausgestaltet sein kann, dass am Kompressor keine oder nur unbedeutende Änderungen vorzunehmen sind.
- Das erfindungsgemässe Ventil weist zusammen mit den Kompressor nur einen geringen Schadraum auf.
- Das erfindungsgemässe Ventil erlaubt die Fördermenge des Kompressors zu regulieren, weil das Ventil nicht während jedem Taktzyklus geschlossen und geöffnet werden muss, sondern während zumindest einem Taktzyklus auch ständig geöffnet oder ständig geschlossen sein kann.

Die Erfindung wird nachfolgend an Hand von Ausführungsbeispielen beschrieben. Es zeigen:
- Fig. 1: einen Längsschnitt durch ein schematisch dargestelltes Druckventil in geöffnetem Zustand;
- Fig. 2: eine perspektivische Ansicht von zwei Haltevorrichtungen
- Fig. 3: einen Schnitt durch Teilkomponenten der Haltevorrichtung aus Blickrichtung C;
- Fig. 4a: eine Explosionszeichnung einer Ventilplatte mit einer Dichtplatte;
- Fig. 4b: eine Seitenansicht der in Figur 4a dargestellten Ventilplatte mit Dichtplatte in zusammengesetztem Zustand;
- Fig. 5: einen Längsschnitt durch ein schematisch dargestelltes Druckventil mit einer Ventilplatte ohne Dichtplatte, welches nicht Teil der vorliegenden Erfindung ist;
- Fig. 6: einen Längsschnitt durch ein weiteres Ausführungsbeispiel eines aktiv gesteuerten Ventils;
- Fig. 7: ein Diagramm des Drehwinkels der Ventilplatte in Funktion der Zeit während dem Spannen der Haltefeder;
- Fig. 8: ein Diagramm der in der Haltefeder und Antriebsfeder gespeicherten Energie in Funktion der Zeit während dem Vorgang gemäss Figur 7;
- Fig. 9a: bis 9h die Stellung der Ventilplatte sowie die in der Halte- und Antriebsfeder gespeicherte Energie zu unterschiedlichen Zeitpunkten;
- Fig. 10: einen Längsschnitt durch ein schematisch dargestelltes Saugventil in geöffnetem Zustand;
- Fig. 11: schematisch eine Draufsicht auf ein aktiv gesteuertes Ventil mit linear beweglicher Ventilplatte, welches nicht Teil der vorliegenden Erfindung ist;
- Fig. 12: schematisch einen Längsschnitt durch ein gekrümmt verlaufende Grundplatte mit Ventilplatte;
- Fig. 13: schematisch einen Längsschnitt durch eine V-förmig verlaufende Grundplatte mit Ventilplatte;
- Fig. 14: einen Längsschnitt durch ein weiteres Ausführungsbeispiel eines Ventils;
- Fig. 15: eine Draufsicht auf das in Figur 14 dargestellte Ventil endlang der Schnittlinie B-B;
- Fig. 16,17: die Draufsicht gemäss Figur 15 mit angezogenem Anker in erster bzw. zweiter Stellung;
- Fig. 18: schematisch einen Schnitt durch ein Topfmagnet mit beabstandetem Anker;
- Fig. 19: schematisch einen Schnitt durch ein Topfmagnet mit angezogenem Anker;
- Fig. 20: ein Längsschnitt durch ein weiteres Ausführungsbeispiel eines Ventils.

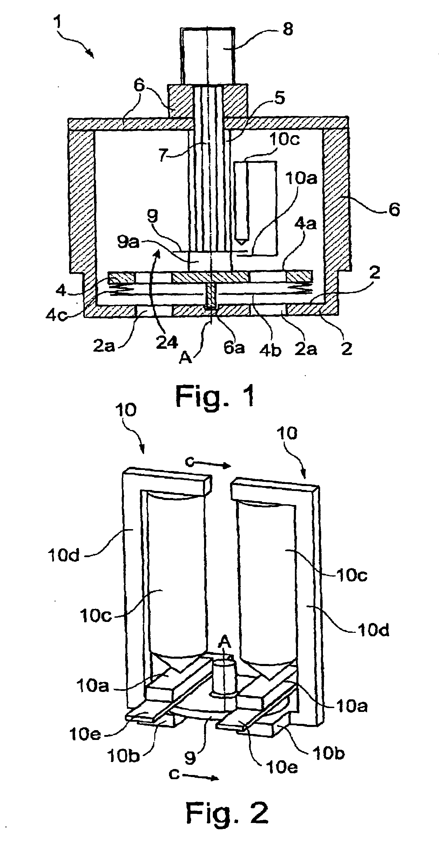

Figur 1 zeigt in einem Längsschnitt ein aktiv gesteuertes Ventil 1. Das Ventil 1 umfasst ein Gehäuse 6, auch als Laterne bezeichnet, , an welchem unten eine Gegenplatte 2, bei klassischen Ventilen als Ventilsitz bezeichnet, mit Durchlassöffnungen 2a angeordnet ist, und mit welchem oben ein Antrieb 8 fest verbunden ist. Innerhalb des Gehäuses 6 ist eine scheibenförmige Ventilplatte 4 mit Durchlassöffnungen 4a drehbar um eine senkrecht zur Ventilplatte 4 verlaufende Längsachse A angeordnet. Die Ventilplatte 4, auch als Schliesskörper bezeichnet, ist zudem in einem Radiallager 6a drehbar gelagert. Sowohl die Ventilplatte 4 als auch die Gegenplatte 2 weisen eine Mehrzahl von in Umfangsrichtung zur Längsachse A beabstandeten Durchlassöffnungen 2a, 4a auf, welche derart gegenseitig angeordnet sind, dass diese wie dargestellt einen geöffneten Durchlass 24 ausbilden, sodass ein Fluid durchströmen kann, oder bei verdrehter Ventilplatte 4, einen geschlossenen Durchlass 24 ausbilden, was einen Fluidstrom unterbindet. Eine Antriebsfeder 7, welche als Torsionsfeder ausgestaltet ist, verläuft konzentrisch zur Längsachse A und ist sowohl fest an den Antrieb 8 und über das Verbindungsteil 9a auch an die Ventilplatte 4 gekoppelt oder fest mit dieser verbunden. Eine zusätzliche hohlzylinderförmige Haltefeder 5, welche ebenfalls als Torsionsfeder ausgestaltet ist, verläuft ebenfalls konzentrisch zur Längsachse A und ist sowohl mit dem Gehäuse 6 und über das Verbindungsteil 9a auch mit der Ventilplatte 4 fest verbunden. Zudem ist ein als Scheibe ausgestaltetes Festhalteteil 9 konzentrisch zur Längsachse A angeordnet und über das Verbindungsteil 9a verdrehfest mit der Ventilplatte 4 verbunden. Innerhalb des Gehäuses 6 ist eine Haltevorrichtung 10 angeordnet, welche einen Aktuator 10c sowie ein Halteteil 10a umfasst. Bei aktiviertem Aktuator 10c wird die Festhaltescheibe 9 zwischen den Aktuator 10c und das Halteteil 10a geklemmt, sodass die Festhaltescheibe 9 blockiert ist, und dadurch die Ventilplatte 4 in deren jeweiligen Lage gehalten ist. Der Aktuator 10c ist vorzugsweise als piezoelektrischer Wandler beziehungsweise als Piezoaktuator ausgestaltet. Dieser weist den Vorteil auf, dass eine sehr schnelle Betätigung, beziehungsweise ein sehr schnelles Festhalten und Loslassen in der Grössenordnung von Millisekunden möglich ist, und dass eine relativ grosse Halte- beziehungsweise Klemmkraft erzeugbar ist, was ein sicheres Halten der Festhaltescheibe 9 und somit der Ventilplatte 4 gewährleistet. Die als Klemmvorrichtung ausgestaltete Haltevorrichtung 10 kann in einer Vielzahl von Möglichkeiten ausgestaltet sein, beispielsweise auch mit einem elektromagnetischen Aktuator 10c oder einem pneumatischen oder hydraulischen Aktuator 10c. Die Antriebsvorrichtung 8 ist im dargestellten Ausführungsbeispiel als Elektromotor ausgestaltet. Als Antriebsvorrichtung 8 könnte auch eine Vielzahl anderer Antriebssysteme verwendet werden, zum Beispiel auch ein hydraulisches oder pneumatisches Antriebssystem.

Figur 2 zeigt schematisch in einer perspektivischen Ansicht ein Ausführungsbeispiel von zwei nebeneinander angeordneten Haltevorrichtungen 10. Jede Haltevorrichtung 10 umfasst ein U-förmiges Verbindungsmittel 10d, welches einerseits mit einem piezoelektrischen Wandler 10c und andererseits mit einer Haltebacke 10b verbunden ist. Zudem ist ein Halteteil 10a fest mit einem Steg 10e verbunden, wobei der Steg 10e fest mit dem Gehäuse 6 verbunden ist. Die Festhaltescheibe 9 ist um die Drehachse A drehbar gelagert, wobei die Festhaltescheibe 9 zwischen dem Steg 10e und der Haltebacke 10b verläuft, sodass beim Betätigen des Wandlers 10c die Festhaltescheibe 9 festgeklemmt oder freigegeben wird. Die Festhaltevorrichtung 10 ist bezüglich der Festhaltescheibe 9 vorzugsweise schwimmend, beziehungsweise in Verlaufsrichtung der Achse A verschiebbar angeordnet, um ein sicheres Halten der Festhaltescheibe 9 zu ermögliche, insbesondere auch dann, wenn sich einzelne Komponenten des Ventils, zum Beispiel auf Grund von Temperaturschwankungen, unterschiedlich ausgedehnt haben.

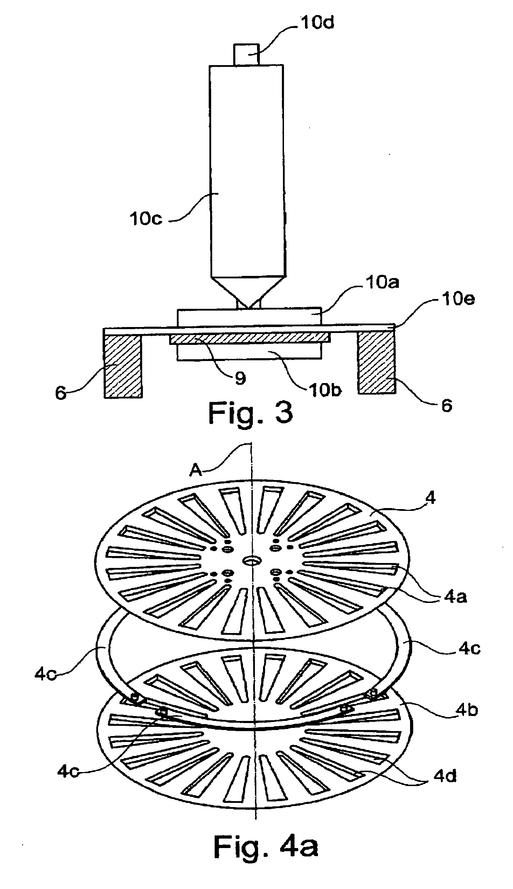

Figur 3 zeigt in einer Seitenansicht ein Detail der Haltevorrichtung 10. Der Steg 10e ist fest mit dem Gehäuse 6 verbunden. Das Halteteil 10a ist fest mit dem Steg 10e verbunden. Zwischen der Festhaltescheibe 9 ist die Haltebacke 10b und der Steg 10e angeordnet. Ein Betätigen des piezoelektrischen Wandlers 10c bewirkt ein Schliessen beziehungsweise Öffnen von Wandler 10c und Haltebacke 10b.

Figur 4a zeigt in einer Explosionszeichnung ein weiteres Ausführungsbeispiel einer Ventilplatte 4, welche eine Vielzahl schlitzförmiger, radial zur Drehachse A verlaufender Durchlassöffnungen 4a aufweist. Die Ventilplatte 4 umfasst zudem drei in Umfangsrichtung der Ventilplatte 4 verteilt angeordnete Federelemente 4c, welche eine Dichtplatte 4b halten. Die Dichtplatte 4b weist ebenfalls Durchlassöffnungen 4d auf, welche vorzugsweise identisch und deckungsgleich zu den Durchlassöffnungen 4a ausgestaltet und angeordnet sind.

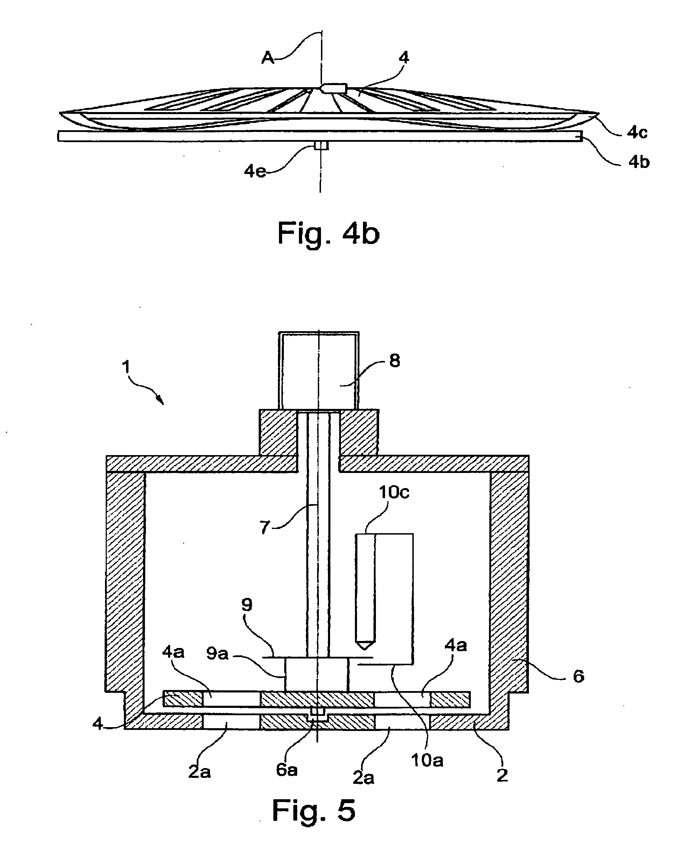

Figur 4b zeigt in einer Seitenansicht die in Figur 4a dargestellte, und nun zusammengebaute Ventilplatte 4. Die Ventilplatte 4 ist hier unter Belastung und mit übertriebener Verformung dargestellt. Die Dichtplatte 4b weist unten einen vorstehenden Führungsstift 4e auf, welcher in dem in Figur 1 dargestellten Radiallager 6a gelagert ist. Die Dichtplatte 4b ist bezüglich der Ventilplatte 4 über die Federelemente 4c in Richtung der Drehachse A federn gelagert. Diese Ausgestaltung weist den Vorteil auf, dass die Dichtplatte 4b bei geschlossenem und unter Druck stehendem Ventil 1 fest an die Gegenplatte 2 gepresst wird und somit fest anliegt, sodass die Durchlassöffnungen 2a der Gegenplatte 2 äusserst dicht verschlossen sind.

Figur 5 zeigt ein nicht zur vorliegenden Erfindung gehörendes Ausführungsbeispiel eines schematisch dargestellten Ventils 1, welches im Unterschied zu dem in Figur 1 dargestellten Ventil keine Haltefeder 5 aufweist. Wie in Figur 5 schematisch dargestellt, kann die Ventilplatte 4 zudem auch ohne Dichtplatte 4b und Federelement 4c ausgestaltet sein, sodass die Ventilplatte 4 direkt auf der Gegenplatte 2 anliegt und je nach gegenseitiger Stellung von Durchlassöffnungen 4a und Durchlassöffnungen 2a einen Durchlass 24 ausbildet, oder die Durchlassöffnungen 2a verschliesst. Eine derart ausgestaltete Ventilplatte 4 könnte auch in dem in Figur 1 dargestellten Ausführungsbeispiel verwendet werden.

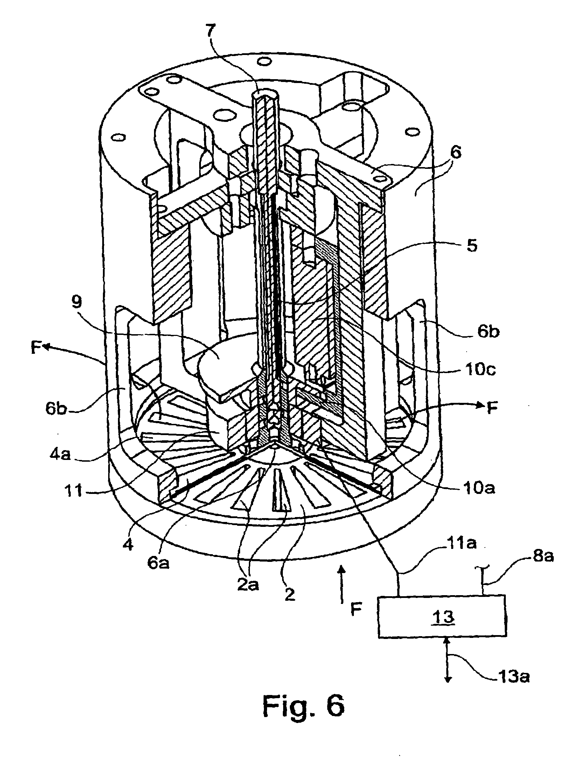

Figur 6 zeigt in einem Längsschnitt ein weiteres Ausführungsbeispiel eines aktiv gesteuerten Ventils 1 im Detail. Das Ventil 1 umfasst ein Gehäuse 6, wobei die an der oberen Stirnseite des Gehäuses 6 anzuordnende Antriebsvorrichtung 8 nicht dargestellt ist. Im Gehäuse 6 ist eine Gegenplatte 2 mit Durchlassöffnungen 2a angeordnet. Oberhalb der Gegenplatte 2 ist die Ventilplatte 4 mit Durchlassöffnungen 4a drehbar angeordnet. Das Gehäuse 6 weist seitliche Öffnungen 6b auf, sodass sich eine Fluid leitende Verbindung F zwischen den Durchlassöffnungen 2a, 4a und den seitlichen Öffnungen 6b ergibt. Ein als Antriebsfeder 7 ausgestalteter Torsionsstab ist fest mit einer Festhaltescheibe 9 verbunden. Die Festhaltescheibe 9 ist zudem über eine hohlzylinderförmige Haltefeder 5 fest mit dem Gehäuse 6 verbunden. Im Gehäuse 6 ist eine Festhaltevorrichtung 10 umfassend einen Piezoaktuator 10c und eine Bremsbacke 10b derart bezüglich der Festhaltescheibe 9 angeordnet, dass diese vom Piezoaktuator 10c festgehalten beziehungsweise freigegeben werden kann. Die Festhaltescheibe 9 ist verdrehfest mit der Ventilplatte 4 verbunden. Zudem ist ein Positionssensor 11 mit der Ventilplatte 4 gekoppelt, um dem Drehwinkel der Ventilplatte 4 zu erfassen. Beim vollständigen Ventil 1 ist die Antriebsfeder 7, wie beispielsweise in Figur 1 schematisch dargestellt, mit einer Antriebsvorrichtung 8 verbunden, welche an dem oben vorstehenden Ende der Antriebsfeder 7 an dieser angreift.

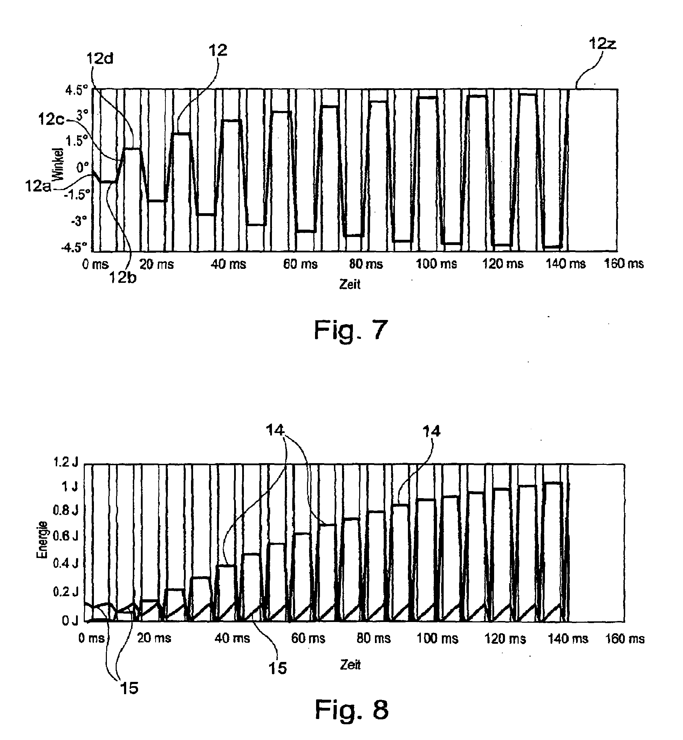

Das Ventil gemäss Figur 6 macht sich die in der Haltefeder 5 gespeicherte Federenergie zu Nutzen, um, über ein Betätigen der Festhaltevorrichtung 10, das Ventil 1 schnell und zudem zeitlich sehr präzise und reproduzierbar zu öffnen und zu schliessen. Es ist daher beim Ventil 1 gemäss Figur 6 von zentraler Bedeutung, dass in der Haltefeder 5 jeweils genügend Energie gespeichert ist, um die Ventilplatte 4 in der geforderten Zeit zu bewegen. Die Antriebsvorrichtung 8 dient im Wesentlichen dazu, die Haltefeder 5 mit genügender Federenergie zu versorgen, beziehungsweise die Ventilplatte 4 um einen derartigen Winkelbereich zu verdrehen, dass in der Haltefeder 5 genügend Federenergie für einen Betrieb des Ventils 1 gespeichert ist. In dem in Figur 6 dargestellten Ausführungsbeispiel wird diese Federenergie von der Antriebsvorrichtung 8 über die Antriebsfeder 7 der Ventilplatte 4 beziehungsweise der Haltefeder 5 zugeleitet. Die Antriebsvorrichtung 8 kann derart kräftig ausgestaltet sein, dass diese in der Lage ist das gesamte erforderliche Drehmoment, welches beispielsweise in der Grössenordnung von 50 Nm liegt, zur Verfügung zu stellen. Eine derartige Antriebsvorrichtung 8 weist jedoch den Nachteil auf, dass diese relativ gross ist. In einer besonders vorteilhaften Ausgestaltung des Ventils 1 wird daher eine kleinere Antriebsvorrichtung 8 verwendet, deren maximal erzeugbares Moment kleiner ist als das zum Spannen der Haltefeder 5 erforderliche Drehmoment. Ein derartiges Betriebsverfahren zum Betrieb des in Figur 6 dargestellten Ventils 1 wird nun mit Hilfe der Figuren 7, 8 und 9a bis 9h im Detail beschrieben. Die Figuren 7 und 8 zeigten das erstmalige Spannen der Haltefeder 5.

Figur 7 zeigt für die Ausführungsbeispiele gemäss Figur 1 und 6 ein Diagramm des Drehwinkels der Ventilplatte 4 in Funktion der Zeit, wobei sich die Ventilplatte 4 zum Zeitpunkt 0 in einer neutralen Ruhelage befindet, in welcher weder in der Haltefeder 5 noch in der Antriebsfeder 7 ein Federenergie gespeichert ist. Im dargestellten Ausführungsbeispiel ist es das Ziel des dargestellten Verfahrens, die Ventilplatte 4 am Ende um einen Winkel von + 4.5 ° gedreht und in dieser Lage fixiert zu haben. Dazu bewirkt die Antriebsvorrichtung 8 in einem ersten Verfahrensschritt ein Drehmoment auf die Antriebsfeder 7, sodass die Ventilplatte 4, wie mit 12a dargestellt, um einen negativen Winkel gedreht und danach, wie mit 12b dargestellt, von der Festhaltevorrichtung 10 in dieser Lage gehalten wird. Daraufhin bewirkt die Antriebsvorrichtung 8 in einem zweiten Verfahrensschritt über die Antriebsfeder 7 ein entgegengesetztes Drehmoment auf die Ventilplatte 4. Danach öffnet sich, wie mit 12c dargestellt, die Festhaltevorrichtung 10, und schliesst sich wieder, sobald sich die in Richtung positiver Winkelgrade bewegende Ventilplatte 4 in Ruhelage oder beinahe in Ruhelage befindet. Die Ventilplatte 4 wird daraufhin, wie mit 12d dargestellt, in der dargestellten Lage gehalten. Der absolute Betrag der Verdrehung der Ventilplatte 4 hat in der Lage gemäss 12d gegenüber der Lage gemäss 12b zugenommen, da nebst dem Drehmoment der Antriebsfeder 7 auch das Drehmoment der Haltefeder 5 auf die Ventilplatte 4 wirkte, sodass die Ventilplatte 4, wie in Figur 7 dargestellt, mit jedem zusätzlichen Verfahrensschritt eine grössere Verdrehung aufweist. Dieses Verfahren wird mehrmals nacheinander ausgeführt und wird im dargestellten Ausführungsbeispiel beendet, sobald die Ventilplatte 4 um einen Drehwinkel von zumindest + 4.5° gedreht und in dieser Lage fest gehalten ist. Somit ist in der Haltefeder 5 genügend Federenergie gespeichert, um das Ventil 1 zu betreiben, und die Ventilplatte 4 befindet sich in einer Arbeitsposition 12z. Der ganze Vorgang, um die Ventilplatte 4 aus der Ruheposition 12 in die Arbeitsposition 12z zu bewegen dauert im dargestellten Ausführungsbeispiel etwas 145 ms. Dieses Verfahren wir auch als Aufschaukeln beziehungsweise als Aufschaukelungsverfahren bezeichnet.

Figur 8 zeigt mit demselben, bereits in Figur 7 dargestellten Zeitraster die sich in Funktion der Zeit in der Haltefeder 5 akkumulierende Federenergie 14 sowie die von der Antriebsfeder 7 in Funktion der Zeit zugeführte Federenergie 15. Die Antriebsfeder 7 wird durch die Antriebsvorrichtung 8 ständig wiederholend gespannt, mit, abgesehen von einem Einschwingvorgang zu Beginn des Verfahrens, im Wesentlichen derselben Federenergie. Diese Federenergie der Antriebsfeder 7 wird während dem Verfahren wie dargestellt in der Haltefeder 5 akkumuliert. Das erfindungsgemässe Verfahren weist den Vorteil auf, dass zum Spannen der Haltefeder 5 eine Antriebsvorrichtung 8 genügt, welche ein Drehmoment zu erzeugen vermag, das wesentlich geringer ist als das zum Spannen der Haltefeder 5 maximal erforderliche Drehmoment. Dies ermöglicht eine Antriebsvorrichtung 8 kleiner Bauart zu verwenden, was den Vorteil aufweist, dass die Antriebsvorrichtung 8 klein und kostengünstiger ist, und zudem auf Grund der geringeren Massenträgheit schneller betreibbar ist. Das Spannen der Haltefeder 5 ist selbst mit einer sehr schwachen Antriebsvorrichtung 8 möglich, falls genügend Verfahrensschritte 12a, 12b, 12c, 12d durchgeführt werden. Anders ausgedrückt bestimmt die maximal zum Spannen der Haltefeder 5 zur Verfügung stehende Zeit das Drehmoment, welche die Antriebsvorrichtung 8 zu liefert hat.

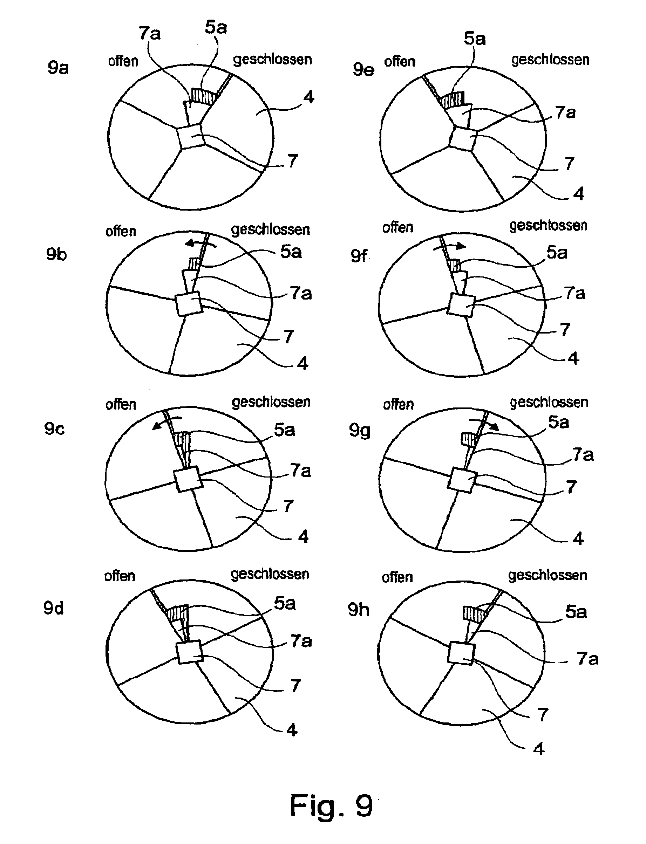

Die Figuren 9a bis 9h zeigen in einer Draufsicht auf die Ventilplatte 4 schematisch die sich zeitlich verändernden Stellungen der Ventilplatte 4 während dem Schaltbetrieb des Ventils 1. Ebenfalls dargestellt ist die Lage des Kopfendes der Antriebsfeder 7, welches mit der Antriebsvorrichtung 8 verbunden ist. In Figur 9a befindet sich die Ventilplatte 4 in der Geschlossenstellung, wobei in der Haltefeder 5 die flächig dargestellte Federenergie 5a gespeichert ist. Die Antriebsvorrichtung 8 hat die Antriebsfeder 7 bereits in die für die Offenstellung des Ventils 1 erforderliche Lage bewegt, sodass in der Antriebsfeder 7 die flächig dargestellte Federenergie 7a gespeichert ist. Die Flächen der Federenergien 5a und 7a sind proportional zu den in der Haltefeder 5 beziehungsweise der Antriebsfeder 7 zum jeweiligen Zeitpunkt gespeicherten Energien. Diese Flächen sind nur schematisch dargestellt, wobei die Fläche 5a beziehungsweise die in der Haltefeder 5 üblicherweise gespeicherte Energie in dem in Figur 9a dargestellten Zustand wesentlich grösser ist als die Fläche 7a beziehungsweise die in der Antriebsfeder 7 gespeicherte Energie. Vorteilhafterweise ist die Fläche 5a beziehungsweise die gespeicherte Energie zumindest 10 mal grösser als die Fläche 7a.

In Figur 9b wird die Festhaltevorrichtung 10 gelöst, sodass sich die Ventilplatte 4 in Richtung Offenstellung bewegt, wobei die in den Federn 5 und 7 gespeicherte Energie reduziert wird, zugunsten der kinetischen Energie, welche von den sich in Bewegung befindlichen Teilen, insbesondere der Ventilplatte 4. der Festhaltescheibe 9 und dem Verbindungsteil 9a aufgenommen wird.

In Figur 9c wird die kinetische Energie zunehmend wieder in die Federn 5 und 7 übertragen. Sobald die gesamte kinetische Energie abgebaut ist gelangt die Ventilplatte 4, wie in Figur 9d dargestellt, in der Offenstellung zum Stillstand, und wird in dieser Lage von der Festhaltevorrichtung 10 fixiert. Die von der Antriebsfeder 7 in Figur 9a zur Verfügung gestellte Federenergie 7a wird vorzugsweise derart bestimmt, dass die Durchlassöffnungen 4a der Ventilplatte 4 deckungsgleich zu den Durchlassöffnungen 2a der Gegenplatte 2 zu liegen kommen, sobald die Ventilplatte 4 still steht. Falls dies nicht der Falls sein sollte, kann die Lage der Ventilplatte 4 durch Betätigen der Festhaltevorrichtung 10 unmittelbar zum Stillstand gebracht werden. Die Stellung der Ventilplatte 4 kann über den Positionssensor 11 gemessen werden. Die im Zustand gemäss Figur 9a zugeführte Federenergie 7a wird vorteilhafterweise derart angesteuert beziehungsweise bemessen, dass die Ventilplatte 4 in der vorhin genannte, optimalen Position zum Stillstand gelangt. Dies ergibt den Vorteil, dass die Festhaltevorrichtung 10 beim Blockieren der Ventilplatte 4 kaum oder überhaupt nicht abgenutzt wird. Dazu ist eine Steuerungsvorrichtung 13 vorgesehen, welche die Signale 11 a des Positionssensors 11 erfasst, und die Antriebsvorrichtung 8 über die Leitung 8a entsprechend ansteuert. Die Steuerungsvorrichtung 13 ist, wie in Figur 6 dargestellt, beispielsweise über einen Datenbus 13a mit einer übergeordneten Ansteuerungsvorrichtung verbunden.

Zum Schliessen der Ventilplatte 4 wird, wie in Figur 9e dargestellt, die Antriebsvorrichtung 8 betätigt und dabei die Antriebsfeder 7 bei blockierter Ventilplatte 4 gedreht, sodass der Antriebesfeder 7 Federenergie zugeleitet wird, und diese am Ende der Betätigung der Antriebsvorrichtung 8 die Federenergie 7a aufweist. Daraufhin wird, wie in Figur 9f dargestellt, die Festhaltevorrichtung 10 geöffnet, sodass sich die Ventilplatte 4 in die Geschlossenstellung bewegt, wobei die Federenergien 5a und 7a in kinetische Energie umgewandelt werden, und im Betriebszustand gemäss Figur 9g die kinetische Energie wieder in Federenergien 5a und 7a umgewandelt werden, bis die Ventilplatte gemäss Figur 9h zum Stillstand gelangt und durch Betätigen der Festhaltevorrichtung 10 fixiert wird.

Dieser in den Figuren 9a bis 9g dargestellte Vorgang wird nun bei jedem Öffnen beziehungsweise bei jedem Schliessen des Ventils 1 wiederholt. Die Schaltzeit des Ventils 1 zwischen Geschlossenstellung und Offenstellung gemäss Figur 9a und Figur 9d beziehungsweise zwischen Offenstellung und Geschlossenstellung gemäss Figur 9e und 9h kann abhängig von der Ausgestaltung des Ventil 1 sehr kurz ausfallen, und beispielsweise 1 ms betragen. Vorzugsweise werden Schaltzeiten im Bereich zwischen 1 ms und 10 ms verwendet. Das Öffnen und Schliessen des Ventils 1 wird natürlich mit dem Betriebszyklus der entsprechenden Maschine, beispielsweise einem Kolbenkompressor, synchronisiert. Das erfindungsgemässe Ventil 1 kann auch sehr einfach derart angesteuert werden, dass sich dieses nicht bei jedem Zyklus des Kolbenkompressors öffnet und schliesst, sondern beispielsweise nur bei jedem 2., 3. oder 4. Arbeitszyklus. Dies wird beispielsweise dadurch erreicht, dass die Festhaltevorrichtung 10 während den entsprechenden Arbeitszyklen geschlossen bleibt, und somit das Ventil 1 in der jeweiligen Stellung verharrt. Der Takt des Öffnens und Schliessens des Ventils 1 kann somit beliebig bezüglich dem Arbeitszyklus des Kolbenkompressors variiert werden.

Das erfindungsgemässe Ventil kann in Form einer Saug- oder eines Druckventils ausgestaltet sein. In Kombination mit einem Kolbenkompressor wird das Saugventil derart angeordnet, dass es das Medium in den Kolbenraum einströmen lässt, und das Druckventil derart angeordnet, dass es das Medium aus dem Kolbenraum ausströmen lässt.

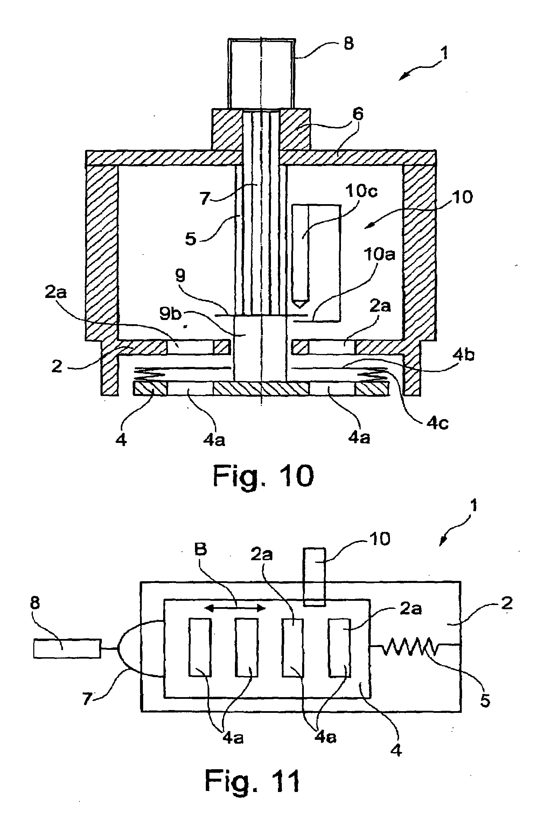

Figur 10 zeigt einen schematischen Längsschnitt durch ein Saugventil 1. Dieses Ventil 1 ist im wesentliche gleich ausgestaltet wie das in Figur 1 dargestellte Ventil 1, wobei die Ventilplatte 4 natürlich auf der gegenüberliegenden Seite der Gegenplatte 2 angeordnet ist. Zum Öffnen und Schliessen der Ventilplatte 4 wird beim Druckventil gemäss Figur 1 und beim Saugventil gemäss Figur 10 dasselbe Verfahren beziehungsweise dieselbe Vorrichtung verwendet.
Figur 11 zeigt schematisch ein nicht zur vorliegenden Erfindung gehörendes Ausführungsbeispiel eines Ventils 1, wobei dessen Ventilplatte 4 durch eine Linearbewegung in Richtung B betätigt wird. Das Ventil 1 umfasst eine Gegenplatte 2 mit Durchlassöffnungen 2a, sowie eine bezüglich der Gegenplatte 2 linear verschiebbar Ventilplatte 4 mit Durchlassöffnungen 4a. Die Ventilplatte 4 ist über eine Antriebsfeder 7 mit einem Linearmotor 8 verbunden. Eine Festhaltevorrichtung 10 kann die Ventilplatte 4 blockieren und freigeben. Das dargestellte Ausführungsbeispiel könnte optional zusätzlich eine Haltefeder 5 aufweisen, welche nur schematisch als Wirkverbindung zwischen Gegenplatte 2 und Ventilplatte 4 dargestellt ist. Das in Figur 11 dargestellte Ventil 1 mit Haltefeder 5 ist wie in den Figuren 7, 8 und 9a bis 9h beschrieben betreibbar, mit dem einzigen Unterschied, dass die Ventilplatte nicht eine rotatorische Bewegung sondern eine lineare Bewegung B durchführt.

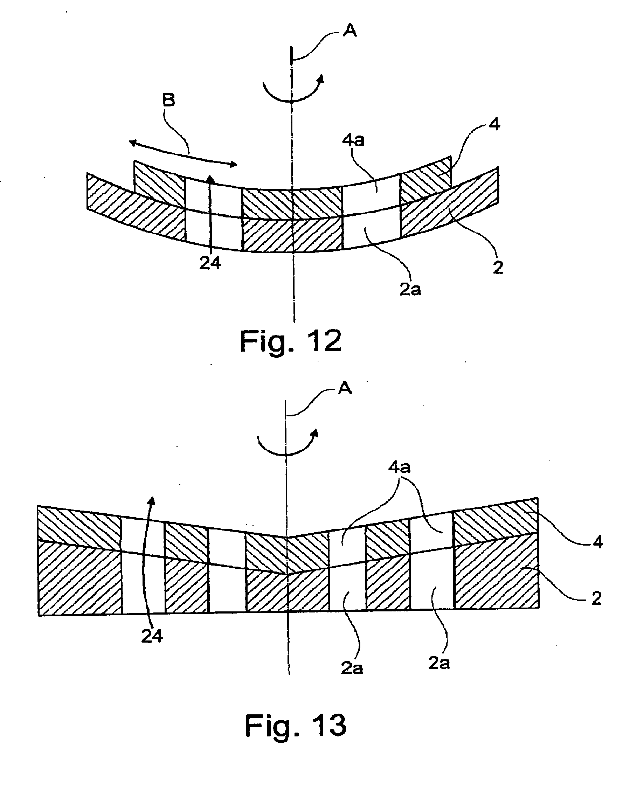

Die Ventilplatte 4 und die Gegenplatte 2 des Ventils 1 können auf unterschiedliche Weise derart ausgestaltet sein, dass eine gegenseitiges Verschieben mittels einer Drehbewegung möglich ist. Figur 12 zeigt schematisch in einem Längsschnitt eine sphärisch verlaufende Ventilplatte 4 mit Gegenplatte 2, wobei die Ventilplatte 4 entweder über eine Rotationsbewegung um die Achse A oder eine Translationsbewegung in Richtung B bezüglich der Gegenplatte 2 verschiebbar gelagert ist, um durch diese Bewegung den Durchlass 24 zu öffnen oder zu schliessen. Figur 13 zeigt ein weiteres Ausführungsbeispiel mit einer Ventilplatte 4 und einer Gegenplatte 2 mit kegelförmig verlaufenden Auflageflächen. Die Ventilplatte 4 ist um die Achse A drehbar gelagert, um den Durchlass 24 zu öffnen oder zu schliessen.

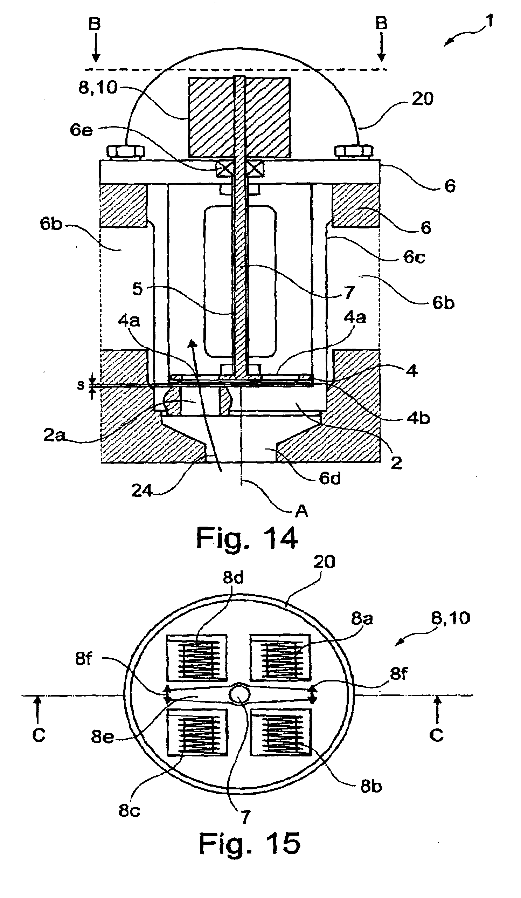

Figur 14 zeigt in einem Längsschnitt ein weiteres Ausführungsbeispiel eines Ventils 1. Das Ventil 1 umfasst ein Gehäuse 6 mit einer Eintrittsöffnung 6d, Austrittsöffnungen 6b sowie einer sogenannten Laterne 6c mit integriertem Ventilsitz und Gegenplatte 2. Das Ventil 1 umfasst eine Antriebsvorrichtung 8, welche zudem als Haltevorrichtung 10 ausgestaltet ist. Diese beiden Vorrichtungen 8,10 sind derart ausgestaltet, dass ein Drehmoment auf den oberen Abschnitt der Antriebsfeder 7 ausgeübt werden kann. Am unteren Ende der Antriebsfeder 7 ist eine Ventilplatte 4 fest mit der Antriebsfeder 7 verbunden, wobei die Ventilplatte 4 um die Drehachse A drehbar gelagert ist. Die Ventilplatte 4 umfasst eine Durchlassöffnung 4a welche bezüglich der Durchlassöffnung 2a der Gegenplatte 2 verschiebbar gelagert ist, sodass die Durchlassöffnung 2a und somit der Durchlass 24 durch ein Verdrehen der Ventilplatte 4 geöffnet beziehungsweise geschlossen werden kann. In einer bevorzugten Ausgestaltung wird die Ventilplatte 4 derart verdreht, dass die Durchlassöffnung 2a in einer ersten Stellung der Ventilplatte 4 vollständig geöffnet ist, indem die Durchlassöffnung 4a über der Durchlassöffnung 2a zu liegen kommt, und dass die Durchlassöffnung 2a in einer zweiten Stellung der Ventilplatte 4 vollständig geschlossen ist, indem die Durchlassöffnung 2a vollständig durch die Ventilplatte 4 bedeckt ist. Es kann sich jedoch auch als vorteilhaft erweisen die Ventilplatte 4 und somit auch die Durchlassöffnung 4a derart bezüglich der Durchlassöffnung 2a zu verdrehen, dass nur eine Teilfläche der gesamten Durchlassöffnung 2a als Durchlass 24 zur Verfügung steht, wogegen der restliche Anteil der Durchlassöffnung 2a von der Ventilplatte 4 bedeckt ist.

In einer vorteilhaften Ausgestaltung umfasst das Ventil 1 eine Hohlstabtorsionsfeder 5, welche unten mit der Ventilplatte 4 und oben mit dem Gehäuse 6 fest verbunden ist. Innerhalb der Hohlstabtorsionsfeder 5 ist eine Vollstabtorsionsfeder 7 angeordnet, welche unten fest mit der Ventilplatte 4 verbunden ist und oben mit der Antriebs- und Haltevorrichtung 8,10 verbunden ist.

Das in Figur 14 dargestellte Ventil 1 ist im Wesentlichen als Zweimassenschwinger ausgestaltet, wobei die eine Masse insbesondere durch die Ventilplatte 4 und die andere Masse insbesondere durch den Anker 8e gebildet ist. Das Ventil 1 umfasst im Wesentlichen zwei Federn, nämlich die Antriebsfeder 7 und die Haltefeder 5, wobei der Zweimassenschwinger derart ausgestaltet ist, dass die Ventilplatte 4 über die Haltefeder 5 mit dem fest stehenden Gehäuse 6 verbunden ist, und dass die Ventilplatte 4 über die Antriebsfeder 7 mit dem Anker 8e verbunden ist. In einer vorteilhaften Ausgestaltung weisen die Eigenfrequenzen der Ventilplatte 4 und des Ankers 8e ein reelles Verhältnis auf, wobei die Eigenfrequenz insbesondere von der Federsteifigkeit der Federn 5 und 7 und insbesondere von der Masse der Ventilplatte 4 und des Ankers 8e abhängt.

Es kann sich als vorteilhaft erweisen die Ventilplatte 4, wie auch in Figur 1 dargestellt, mit einer Dichtplatte 4b zu versehen, welche über ein in Figur 14 nicht dargestelltes Federmittel federnd mit der Ventilplatte 4 verbunden ist. Es kann sich zudem als Vorteilhaft erweisen die Antriebs- und Haltevorrichtung 8,10 mit einer Schutzkappe 20 zu bedecken, z.B. als Schutz vor Verschmutzung. Die Antriebs- und Haltevorrichtung 8,10 ist wie in Figur 14 dargestellt vorteilhafterweise ausserhalb des Gehäuses 6 angeordnet, um nicht mit dem innerhalb des Ventils 1 fliessenden Gas in Berührung zu kommen.

Figur 15 zeigt eine Draufsicht des in Figur 14 dargestellten Ventils 1 entlang der Schnittlinie B-B. Figur 14 zeigt einen Schnitt entlang der Linie C-C. Die in Figur 15 dargestellte Antriebsvorrichtung 8 umfasst vier Magnete 8a, 8b, 8c, 8d, sowie einen drehbar in Bewegungsrichtung 8f hin und her beweglich gelagerten Anker 8e. Die Antriebsfeder 7 ist mit Hilfe eines Lagers 6e drehbar bezüglich des Gehäuses 6 gelagert, wobei der Anker 8e fest mit dem Endabschnitt der Antriebsfeder 7 verbunden ist, sodass die Verlaufsrichtung der Antriebsfeder 7 eine Drehachse A definiert, um welche der Anker 8e drehbar gelagert ist. Durch ein entsprechendes Aktivieren der Magnete 8a, 8b, 8c, 8d ist der Anker 8e in Bewegungsrichtung 8f hin und her bewegbar.

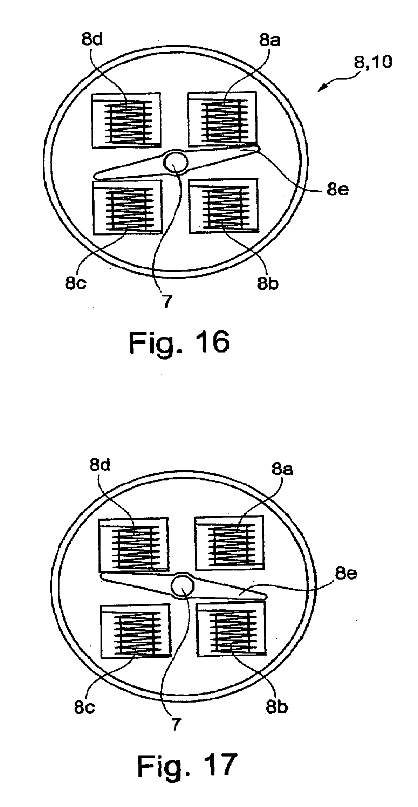

In einer vorteilhaften Ausgestaltung befindet sich der Anker 8e, falls die Magnete 8a, 8b, 8c, 8d stromlos sind, in der in Figur 15 dargestellten Ruhelage, wobei die Ruhelage insbesondere durch die Hohlstabtorsionsfeder 5 bestimmt wird. In einer vorteilhaften Ausgestaltung ist der Durchlass 24 in dieser Ruhelage halb offen. Die Figuren 16 und 17 zeigen die Draufsicht gemäss Figur 15, wobei sich der Anker 8e in Figur 16 in einer ersten Haltestellung und in Figur 17 in einer zweiten Haltestellung befindet. Ausgehend von der in Figur 15 dargestellten Stellung der Ankers 8e können die Magnete 8a,8b,8c,8d vorteilhafterweise derart abwechslungsweise angesteuert werden, dass der Anker 8e in Bewegungsrichtung 8f in Schwingung versetzt wird, ähnlich wie in Figur 7 mit dem Winkelverlauf 12 dargestellt, sodass der Anker 8e bezüglich seiner Verdrehung aufgeschaukelt wird, und in Funktion der Zeit einem zunehmend grösseren Verdrehwinkel aufweist, bis der Anker 8e sich in der in den Figuren 16 und 17 dargestellten ersten beziehungsweise zweiten Haltestellung befindet, indem der Anker 8e die entsprechenden Magnete 8a,8b,8c,8d berührt, und die Magnete 8a,8b,8c,8d nicht mehr umgesteuert werden sonder den Anker 8e konstant anziehen, sodass der Antrieb 8 somit nun als Haltevorrichtung 10 wirkt, und der Anker 8e in der in den Figuren 16 bzw. 17 dargestellten Lage gehalten wird. Dieser Aufschaukelungsvorgang weist, im Unterschied zu dem in Figur 7 dargestellten Winkel-Zeitverlauf, jedoch keine Haltephasen 12b, 12d auf, sodass der Anker 8e mit sich kontinuierlich vergrössernder Amplitude in Bewegungsrichtung 8f angeregt wird, bis der Anker 8e sich derart nahe an den Magneten 8a,8b,8c,8d befindet, dass dieser von den Magneten fest gehalten werden kann. Die zur Ansteuerung der Magneten erforderliche Ansteuerungsvorrichtung, umfassend vorzugsweise zudem einen Sensor zum Erfassen der Auslenkung des Ankers 8e, ist nicht im Detail dargestellt. Vorteilhafterweise sind die Durchlassöffnungen 2a, 4a derart gegenseitig angepasst ausgestaltet und angeordnet, dass die erste Haltestellung beispielweise ein vollständiges Verschliessen des Durchlasses 24 bewirkt, und die zweite Haltestellung ein vollständiges Öffnen des Durchlasses 24 bewirkt. Der Antrieb 8 mit Magneten 8a,8b,8c,8d und Anker 8e ist vorzugsweise derart ausgestaltet, dass ein einmaliges Betätigen der Magnete 8a,8b,8c,8d ein Umschalten zwischen der ersten und zweite Haltestellung bewirkt, was den Vorteil aufweist, dass zwischen den in den Figuren 16 und 17 dargestellten Haltestellungen sehr schnell umgeschaltet werden kann, beziehungsweise dass das Ventil 1 beziehungsweise dessen Durchlass 24 sehr schnell geöffnet beziehungsweise geschlossen werden kann.

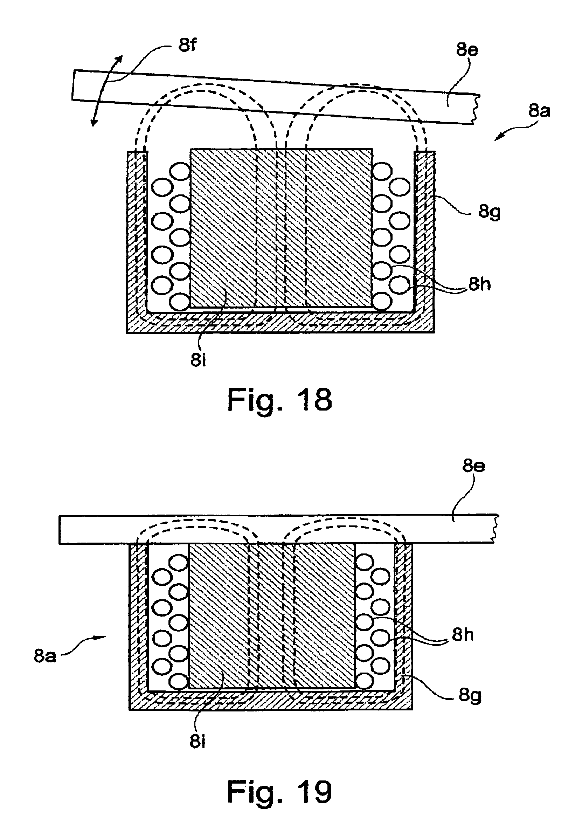

Die Figuren 18 und 19 zeigen in einem Schnitt ein Ausführungsbeispiel eines Magneten 8a. Das Magnet 8a umfasst einen Magnetkern 8i, eine elektrische Wicklung 8h und ein magnetisch leitendes Aussengehäuse 8g. Das Magnetfeld ist strichliert dargestellt. Im dargestellten Ausführungsbeispiel ist das Magnet 8a als ein Topfmagnet ausgestaltet. Diese Ausführungsform weist den Vorteil auf, dass relativ grosse magnetische Kräfte erzeugbar sind, insbesondere eine grosse Haltekraft, und dass das Topfmagnet ein relativ kleines Volumen erfordert beziehungsweise eine relativ kleine Bauform aufweist. In Figur 18 ist der Anker 8e bezüglich dem Magneten 8a beabstandet, wogegen in Figur 18 der Anker 8e fest am Magneten 8a gehalten ist. Um eine grosse Haltekraft zu bewirken ist der Anker 8e vorteilhafterweise derart ausgestaltet und angeordnet, dass der Anker 8e wie in Figur 18 dargestellt vollflächig am Magnet 8a anliegt.

In dem in den Figuren 14 bis 19 dargestellten Ausführungsbeispiel ist der Anker 8f direkt mit der Antriebsfeder 7 verbunden. Der Antrieb 8 mit Anker 8f könne jedoch auch als separate Einheit ausgebildet sein, welche über eine Wirkverbindung, beispielweise eine Welle oder ein Transmissionsriemen, mit der Antriebsfeder 7 verbunden ist, um die Antriebsfeder 7 mit Hilfe des Antriebs 8 zu bewegen.

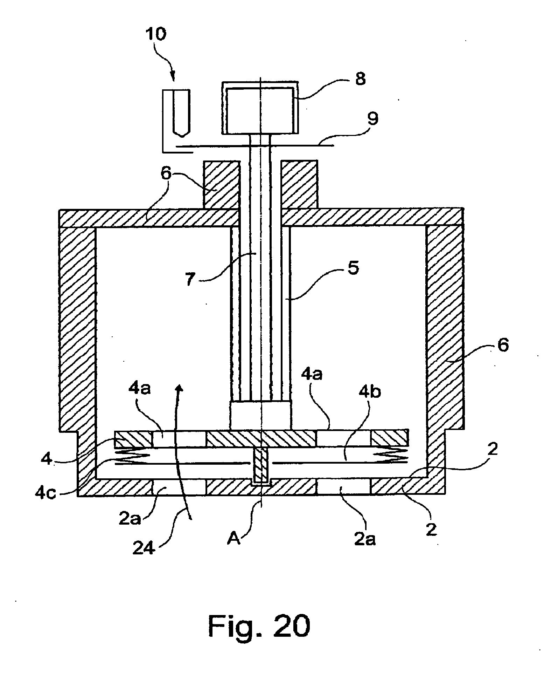

Figur 20 zeigt in einem Längsschnitt ein weiteres Ausführungsbeispiel eines Ventils 1. Im Vergleich zu der in Figur 1. dargestellten Ausführungsform unterscheidet sich die in Figur 20 dargestellte Ausführungsform dadurch, dass die Festhaltescheibe 9 und die Haltevorrichtung 10 ausserhalb des Gehäuses 6 angeordnet sind, im dargestellten Ausführungsbeispiel oben am Gehäuse 6. Ansonst ist das in Figur 20 dargestellte Ventil 1 im wesentlichen gleich ausgestaltet wie das in Figur 1 dargestellte Ventil 1. Das in Figur 20 dargestellte Ventil 20 weist den Vorteil auf, dass die Festhaltescheibe 9 und die Haltevorrichtung 10 nicht den sich im Innenraum des Gehäuses 6 befindlichen Gases und Verunreinigungen ausgesetzt ist, was unter anderem eine erhöhte Betriebssicherheit gewährleistet.

## Patentansprüche

1. Aktiv gesteuertes Ventil (1) mit einem Gehäuse (6), umfassend eine beweglich gelagerte Ventilplatte (4) mit Durchlassöffnungen (4a) sowie eine fest bezüglich dem Gehäuse (6) angeordnete Gegenplatte (2) mit Durchlassöffnungen (2a), wobei die Ventilplatte (4) derart bezüglich der Gegenplatte (2) verschiebbar gelagert ist, dass die Durchlassöffnungen (2a, 4a) einen geöffneten oder verschlossenen Durchlass (24) ausbilden,
sowie umfassend eine Antriebsvorrichtung (8), welche die Ventilplatte (4) antreibt, wobei die Ventilplatte (4) um eine senkrecht zur Gegenplatte (2) verlaufende Längsachse (A) drehbar gelagert ist,
und wobei die Ventilplatte (4) über eine Antriebsfeder (7) mit der Antriebsvorrichtung (8) verbundenist, wobei die Antriebsfeder (7) als eine konzentrisch zur Längsachse (A) verlaufende Torsionsfeder ausgestaltet ist, welche Energie zu speichern vermag, und wobei eine ansteuerbare Haltevorrichtung (10) derart wirkend angeordnet ist, dass die Lage der Ventilplatte (4) fixierbar ist, **dadurch gekennzeichnet, dass** die Ventilplatte (4) über eine zusätzliche Haltefeder (5) mit dem Gehäuse (6) verbunden ist.

2. Ventil nach Anspruch 1, **dadurch gekennzeichnet, dass** die Haltefeder (5) konzentrisch zur Längsachse (A) verläuft.

3. Ventil nach Anspruch 2, **dadurch gekennzeichnet, dass** die Haltefeder (5) als Hohlstabtorsionsfeder ausgestaltet ist.

4. Ventil nach einem der vorhergehenden Ansprüche, **dadurch gekennzeichnet, dass** die Antriebsvorrichtung (8) einen Anker (8f) umfasst, welcher eine Wirkverbindung zur Antriebsfeder (7) aufweist, und dass die Antriebsvorrichtung (8) Magnete (8a,8b,8c,8d) umfasst, welche derart bezüglich dem Anker (8f) angeordnet sind, dass diese den Anker (8f) anziehen, wobei der Anker (8f) insbesondere fest mit der Antriebsfeder (7) verbunden ist, und insbesondere um die Längsachse (A) drehbar gelagert ist.

5. Ventil nach einem der Ansprüche 1 bis 4, **dadurch gekennzeichnet, dass** die Antriebsvorrichtung (8) als Elektromotor ausgestaltet ist, welcher fest mit dem Gehäuse (6) verbunden ist.

6. Ventil nach Anspruch 5, **dadurch gekennzeichnet, dass** der Rotor des Elektromotors konzentrisch zur Längsachse (A) verlaufend angeordnet und fest mit der Antriebsfeder (7) verbunden ist.

7. Ventil nach einem der vorhergehenden Ansprüche, **dadurch gekennzeichnet, dass** die Haltevorrichtung (10) einen piezoelektrischen Antrieb aufweise.

8. Ventil nach einem der vorhergehenden Ansprüche, **dadurch gekennzeichnet, dass** ein Festhalteteil (9) mit der Ventilplatte (4) oder mit der Antriebsfeder (7) verbunden ist, und dass die Haltevorrichtung (10) am Festhalteteil (9) angreift.

9. Ventil nach einem der vorhergehenden Ansprüche, **dadurch gekennzeichnet, dass** die Haltevorrichtung (10) schwimmend im Gehäuse (6) angeordnet ist.

10. Ventil nach einem der Ansprüche 1 bis 9, **dadurch gekennzeichnet, dass** die Antriebsvorrichtung (8) auch als ansteuerbare Haltevorrichtung (10) ausgestaltet ist.

11. Ventil nach einem der vorhergehenden Ansprüche, **dadurch gekennzeichnet, dass** die Ventilplatte (4) eine Dichtplatte (4b) mit Durchlassöffnungen (4d) umfasst, und dass die Dichtplatte (4b) über Federelemente (4c) mit der Ventilplatte (4) verbunden ist.

12. Ventil nach einem der Ansprüche 1 bis 11, **dadurch gekennzeichnet, dass** das von der Antriebsvorrichtung (8) maximal erzeugbar Drehmoment kleiner ist als das maximal an der Haltefeder (5) anliegende Drehmoment.

13. Ventil nach einem der vorhergehenden Ansprüche, umfassend eine Steuerungsvorrichtung (13) sowie einen Positionssensor (11) zum Messen der Stellung der Ventilplatte (4), sowie umfassend ein Steuerungsprogramm für die Steuerungsvorrichtung (13), welches die Antriebsvorrichtung (8) derart ansteuert, dass die von der Antriebsvorrichtung (8) bereitgestellte Energie in der Haltefeder (5) kumuliert wird.

14. Verfahren zum Betrieb eines aktiv gesteuerten Ventils (1), insbesondere nach einem der vorhergehenden Ansprüche, umfassend eine beweglich gelagerte Ventilplatte (4), eine fest angeordnete Gegenplatte (2), eine über eine Antriebsfeder (7) mit der Ventilplatte (4) verbundene Antriebsvorrichtung (8), sowie eine ansteuerbare Haltevorrichtung (10), **dadurch gekennzeichnet, dass** die Ventilplatte (4) durch die Haltevorrichtung (10) in ihrer Position festgehalten wird, dass die Ventilplatte durch die Haltevorrichtung (10) losgelassen wird, sodass die Ventilplatte (4) durch die in der Antriebsfeder (7) gespeicherte Energie bewegt wird, dass die Antriebsfeder (7) durch die Antriebsvorrichtung (8) gespannt wird, und dass die Ventilplatte (4) bei deren Stillstand oder annäherndem Stillstand wieder durch die Haltevorrichtung (10) gehalten wird.

15. Verfahren nach Anspruch 14, **dadurch gekennzeichnet, dass** eine Haltefeder (5) eine Wirkverbindung zwischen der Gegenplatte (2) und der Ventilplatte (4) aufweist, und dass die Ventilplatte (4) schrittweise bewegt und wieder gehalten wird, derart, dass in der Haltefeder (5) eine Federenergie kumuliert wird, welche die von der Antriebsvorrichtung zur Verfügung gestellte Energie übersteigt.

## Claims

1. An actively controlled valve (1) having a housing (6),
including a movably supported valve plate (4) having passage openings (4a) as well as a counter-plate (2) fixedly arranged with respect to the housing (6) and having passage openings (2a), wherein the valve plate (4) is displaceably supported with respect to the counter-plate (2) such that the passage openings (2a, 4a) form an open or closed passage (24),
and including a drive apparatus (8) which drives the valve plate (4),
wherein the valve plate (4) is rotatably supported about a longitudinal axis (A) extending perpendicular to the counter-plate (2),
and wherein the valve plate (4) is connected to the drive apparatus (8) via a drive spring (7),
wherein the drive spring (7) is designed as a torsion spring, that stores energy, the drive spring (7) extending concentrically to the longitudinal axis (A),
and wherein a controllable holding apparatus (10) is arranged to operate such that the position of the valve plate (4) can be fixed,
**characterized in that** the valve plate (4) is connected to the housing (6) via an additional holding spring (5).

2. A valve in accordance with claim 1, **characterized in that** the holding spring (5) extends concentrically to the longitudinal axis (A).

3. A Valve in accordance with claim 2, **characterized in that** the holding spring (5) is designed as a hollow-bar torsion spring.

4. A valve in accordance with any one of the preceding claims, **characterized in that** the drive apparatus (8) includes an armature (8f) which has an operative connection to the drive spring (7), and **in that** the drive apparatus (8) includes magnets (8a, 8b, 8c, 8d) which are arranged with respect to the armature (8f) such that they attract the armature (8f), wherein the armature (8f) is in particular fixedly connected to the drive spring (7) and is in particular rotatably supported about the longitudinal axis (A).

5. A valve in accordance with any one of the claims 1 to 4, **characterized in that** the drive apparatus (8) is designed as an electric motor which is fixedly connected to the housing (6).

6. A valve in accordance with claim 5, **characterized in that** the rotor of the electric motor is arranged extending concentrically to the longitudinal axis (A) and is fixedly connected to the drive spring (7).

7. A valve in accordance with any one of the preceding claims, **characterized in that** the holding apparatus (10) has a piezoelectric drive.

8. A valve in accordance with any one of the preceding claims, **characterized in that** a retaining part (9) is connected to the valve plate (4) or to the drive spring (7), and **in that** the holding apparatus (10) engages at the holding part (9).

9. A valve in accordance with any one of the preceding claims, **characterized in that** the holding apparatus (10) is arranged in a floating manner in the housing (6).

10. A valve in accordance with any one of the claims 1 to 9, **characterized in that** the drive apparatus (8) is also designed as a controllable holding apparatus (10).

11. A valve in accordance with any one of the preceding claims, **characterized in that** the valve plate (4) includes a sealing plate (4b) having passage openings (4d), and **in that** the sealing plate (4b) is connected to the valve plate (4) via spring elements (4c).

12. A valve in accordance with any one of the claims 1 to 11, **characterized in that** the torque which can be generated as a maximum by the drive apparatus (8) is smaller than the torque applied as a maximum to the holding spring (5).

13. A valve in accordance with any one of the preceding claims, including a control apparatus (13) as well as a position sensor (11) for the measurement of the position of the valve plate (4), as well as including a control program for the control apparatus (13) which controls the drive apparatus (8) such that the energy provided by the drive apparatus (8) is accumulated in the holding spring (5).

14. A method for the operation of an actively controlled valve (1), in particular in accordance with any one of the preceding claims, including a movably supported valve plate (4), a fixedly arranged counter-plate (2), a drive apparatus (8) connected to the valve plate (4) via a drive spring (7), as well as a controllable holding apparatus (10), **characterized in that** the valve plate (4) is fixedly held in its position by the holding apparatus (10), **in that** the valve plate is released by the holding apparatus (10) so that the valve plate (4) is moved by the energy stored in the drive spring (7), **in that** the drive spring (7) is tensioned by the drive apparatus (8), and **in that** the valve plate (4) is held by the holding apparatus (10) again when stationary or approximately stationary.

15. A method in accordance with claim 14, **characterized in that** a holding spring (5) has an operative connection between the counter-plate (2) and the valve plate (4), and **in that** the valve plate (4) is moved stepwise and is held again such that a spring energy is accumulated in the holding spring (5) which exceeds the energy provided by the drive apparatus.

## Revendications

1. Soupape à commande active (1) dotée d'un boîtier (6), comprenant un tiroir de soupape (4) monté à déplacement et pourvu d'ouvertures de passage (4a), ainsi qu'un contre-tiroir (2) disposé fixement par rapport au boîtier (6) et pourvu d'ouvertures de passage (2a), sachant que le tiroir de soupape (4) est monté à translation par rapport au contre-tiroir (2) de telle sorte que les ouvertures de passage (2a, 4a) forment un passage (24) ouvert ou fermé,
et comprenant un dispositif d'entraînement (8) qui entraîne le tiroir de soupape (4), sachant que le tiroir de soupape (4) est monté à rotation autour d'un axe longitudinal (A) s'étendant perpendiculairement au contre-tiroir (2),
et sachant que le tiroir de soupape (4) est relié au dispositif d'entraînement (8) par l'intermédiaire d'un ressort d'entraînement (7), sachant que le ressort d'entraînement (7) est réalisé sous la forme d'un ressort de torsion s'étendant concentriquement à l'axe longitudinal (A) et capable d'accumuler de l'énergie, et sachant qu'un dispositif de maintien asservissable (10) est disposé en agissant de telle sorte que la position du tiroir de soupape (4) peut être fixée,
**caractérisée en ce que** le tiroir de soupape (4) est relié au boîtier (6) par l'intermédiaire d'un ressort de maintien supplémentaire (5).

2. Soupape selon la revendication 1, **caractérisée en ce que** le ressort de maintien (5) s'étend concentriquement à l'axe longitudinal (A).

3. Soupape selon la revendication 2, **caractérisée en ce que** le ressort de maintien (5) est réalisé sous la forme d'un ressort de torsion à barre creuse.

4. Soupape selon l'une des revendications précédentes, **caractérisée en ce que** le dispositif d'entraînement (8) comprend un induit (8f) qui présente une liaison fonctionnelle avec le ressort d'entraînement (7), et **en ce que** le dispositif d'entraînement (8) comprend des aimants (8a, 8b, 8c, 8d) qui sont disposés par rapport à l'induit (8f) de telle sorte qu'ils attirent l'induit (8f), sachant que l'induit (8f) est notamment fixement relié au ressort d'entraînement (7), et est notamment monté à rotation autour de l'axe longitudinal (A).

5. Soupape selon l'une des revendications 1 à 4, **caractérisée en ce que** le dispositif d'entraînement (8) est réalisé sous la forme d'un moteur électrique, qui est fixement relié au boîtier (6).

6. Soupape selon la revendication 5, **caractérisée en ce que** le rotor du moteur électrique est disposé en s'étendant concentriquement à l'axe longitudinal (A) et est fixement relié au ressort d'entraînement (7).

7. Soupape selon l'une des revendications précédentes, **caractérisée en ce que** le dispositif de maintien (10) présente un entraînement piézoélectrique.

8. Soupape selon l'une des revendications précédentes, **caractérisée en ce qu'**un élément de blocage (9) est relié au tiroir de soupape (4) ou au ressort d'entraînement (7), et **en ce que** le dispositif de maintien (10) agit sur l'élément de blocage (9).

9. Soupape selon l'une des revendications précédentes, **caractérisée en ce que** le dispositif de maintien (10) est disposé de manière flottante dans le boîtier (6).

10. Soupape selon l'une des revendications 1 à 9, **caractérisée en ce que** le dispositif d'entraînement (8) est également réalisé sous la forme d'un dispositif de maintien asservissable (10).

11. Soupape selon l'une des revendications précédentes, **caractérisée en ce que** le tiroir de soupape (4) comprend une plaque d'étanchéité (4b) pourvue d'ouvertures de passage (4d), et **en ce que** la plaque d'étanchéité (4b) est reliée au tiroir de soupape (4) par l'intermédiaire d'éléments à effet de ressort (4c).

12. Soupape selon l'une des revendications 1 à 11, **caractérisée en ce que** le couple maximal pouvant être produit par le dispositif d'entraînement (8) est inférieur au couple maximal appliqué au ressort de maintien (5).

13. Soupape selon l'une des revendications précédentes, comprenant un dispositif de commande (13) ainsi qu'un capteur de position (11) pour mesurer la position du tiroir de soupape (4), et comprenant un programme de commande pour le dispositif de commande (13), programme qui asservit le dispositif d'entraînement (8) de telle sorte que l'énergie fournie par le dispositif d'entraînement (8) est accumulée dans le ressort de maintien (5).

14. Procédé pour exploiter une soupape à commande active (1), en particulier selon l'une des revendications précédentes, comprenant un tiroir de soupape (4) monté à déplacement, un contre-tiroir (2) disposé fixement, un dispositif d'entraînement (8) relié au tiroir de soupape (4) par l'intermédiaire d'un ressort d'entraînement (7), et un dispositif de maintien asservissable (10), **caractérisé en ce que** le tiroir de soupape (4) est maintenu bloqué dans sa position par le dispositif de maintien (10), **en ce que** le tiroir de soupape est relâché par le dispositif de maintien (10), de sorte que le tiroir de soupape (4) est déplacé par l'énergie accumulée dans le ressort d'entraînement (7), **en ce que** le ressort d'entraînement (7) est tendu par le dispositif d'entraînement (8), et **en ce que** le tiroir de soupape (4) est à nouveau maintenu par le dispositif de maintien (10) lors de son immobilisation ou de son immobilisation approximative.

15. Procédé selon la revendication 14, **caractérisé en ce qu'**un ressort de maintien (5) présente une liaison fonctionnelle entre le contre-tiroir (2) et le tiroir de soupape (4), et **en ce que** le tiroir de soupape (4) est progressivement déplacé et à nouveau maintenu de telle sorte que s'accumule dans le ressort de maintien (5) une énergie de ressort qui est supérieure à l'énergie mise à disposition par le dispositif d'entraînement.
